# EUROPEAN PATENT SPECIFICATION

(11) **EP 0 654 307 B1**
(45) Date of publication and mention of the grant of the patent: **12.05.1999**
(21) Application number: 94307484.9
(22) Date of filing: 12.10.1994
(51) Int. Cl.: B05D 1/20

(54) **Method of two-dimensional aggregation and fixation of protein**
Verfahren zum zweidimensionalen Agglomerieren und Abbinden von Proteinen
Méthode pour l'agrégation et la fixation en deux dimensions de protéines

(30) Priority: 12.10.1993 JP 253880/93
(43) Date of publication of application: 24.05.1995
(73) Proprietor: RESEARCH DEVELOPMENT CORPORATION OF JAPAN, Kawaguchi-shi, Saitama-ken 332 (JP)
(72) Inventor: Yoshimura, Hideyuki, Tsukuba-shi, Ibaraki (JP); Nagayama, Kuniaki, Suginami-ku, Tokyo (JP)
(74) Representative: Matthews, Derek Peter

(56) References cited:
- THIN SOLID FILMS., vol.160, no.1+IN, June 1988, LAUSANNE CH pages 463 - 469, XP327794 M. SRIYUDTHAK ET AL. 'ENZYME-IMMOBILIZED LANGMUIR-BLODGETT FILM FOR A BIOSENSOR'
- THIN SOLID FILMS., vol.176, no.1, 1 September 1989, LAUSANNE CH pages 151 - 156, XP87272 D.G. ZHU ET AL. 'ON THE FORMATION OF LANGMUIR-BLODGETT FILMS CONTAINING ENZYMES'
- THIN SOLID FILMS., vol.216, no.1, 28 August 1992, LAUSANNE CH pages 99 - 104, XP327794 H.SASABE ET AL. 'TWO-DIMENSIONNAL MOLECULAR PACKING OF PROTEINS.'

## Description

### FIELD OF THE INVENTION

The present invention relates to a method of two-dimensional aggregation and fixation of protein. More specifically, the present invention relates to a method of forming a high-quality proteinous two-dimensionally fixed aggregate excellent in uniformity useful as a functional thin film or a three-dimensionally integrated functional film.

### PRIOR ART

It is believed that two-dimensional or three-dimensional structurization of protein is indispensable for next-generation substrate technologies such as molecular element, biosensor and biologically compatible materials. Positive efforts have therefore been made to find a method of structurizing protein at a higher accuracy.

The conventional technologies have however some problems to be solved.

The following representative methods of forming a two-dimensional aggregate of protein are known:
(a) a method of forming a two-dimensional crystalline aggregate by forming a lipid monolayer on the surface of a protein solution and using linkage with protein and fluidity; and
(b) a method of developing a protein solution on the surface of a flat liquid metal such as mercury or a solid such as mica and forming a crystalline aggregate during the drying process thereof.

It is also known, in these methods, that the protein solution is developed by using a substrate solution having a larger specific gravity and a larger surface tension than the protein solution, and dripping the protein solution onto the surface thereof.

In these conventional methods, however, the ratio of success has been very low because of the difficulty in selecting a proper lipid, non-uniformity increased by disturbance during dripping of the protein solution, and the difficulty in forming a two-dimensional aggregate of uniform protein particles. When using mercury, the process has inevitably been complicated as a result of troublesome handling, and large-sized equipment requiring a high cost.

The conventional methods have another problem in that it is difficult to three-dimensionally laminate a two-dimensional aggregate into a multi-layer structure and this serious obstacle in building a three-dimensional protein structure has not as yet been solved. More specifically, protein may be denatured during the drying process in the conventional methods.

### SUMMARY OF THE INVENTION

The present invention has therefore an object to provide a novel method for two-dimensional aggregation and fixation of protein particles, which solves the defects in the conventional methods as described above, permits formation of a uniform and high-quality two-dimensional aggregate, easy three-dimensional lamination, and is applicable with simple equipment and easy operations.

As a means to solve the above-mentioned problems, the present invention provides a method of two-dimensional aggregation and fixation of protein, which comprises the steps of introducing a protein solution into a substrate solution having a larger surface tension and a larger specific gravity than those of the protein solution, causing the protein solution to float and develop on the surface of the substrate solution to produce a denatured protein film on the surface, and causing said film to adsorb further protein having been introduced into the substrate solution and floated.

In the method of the present invention, conceivable embodiments include fixing a two-dimensional aggregate of protein particles into multiple layers by adjusting the concentration and amount of protein solution introduced, heating the two-dimensionally aggregated and fixed protein aggregate to transcribe same onto a solid substrate, and forming a protein denatured film using a kind of protein and two-dimensionally aggregating and fixing onto this denatured film protein of another kind.

Further details of the invention are defined in the features of the dependent claims.

### BRIEF DESCRIPTION OF THE DRAWINGS

Fig.1 shows a process diagram illustrating the method of the present invention; and
Fig. 2 shows a electron micrograph, in replacement of a drawing, showing two-dimensional aggregation and fixation of ferritin as an example.

### DETAILED DESCRIPTION OF THE INVENTION

In the present invention, essentially unlike the conventional methods of dripping and developing a protein solution onto the surface, the protein solution is introduced into a substrate solution having a larger surface tension and a larger specific gravity than those of the protein solution, and then caused to float. Disturbance of solution during development is inhibited, and uniformity is thus remarkably improved.

When forming a protein denatured film, furthermore, it is not necessary to form a lipid monolayer as the two-dimensional aggregate substrate, and according to the method of the present invention, it is easier to accomplish three-dimensional lamination. As a drying step is not required, even a protein not resistant to drying can be used, resulting in simple equipment and operations.

There is no particular limitation on the kind of protein: any protein originating from natural animals or vegetables, or available from synthesis, may be used. While an aqueous solution is usually used, a non-aqueous solution is also applicable.

As a substrate solution having a larger surface tension and a larger specific gravity than the protein solution, there is no particular limitation on the kind thereof: a solution of sugar or an inorganic or organic salt may appropriately be adopted.

This is also the case using a lipid.

Now, the method of the present invention is described further in detail by means of some examples.

### EXAMPLES

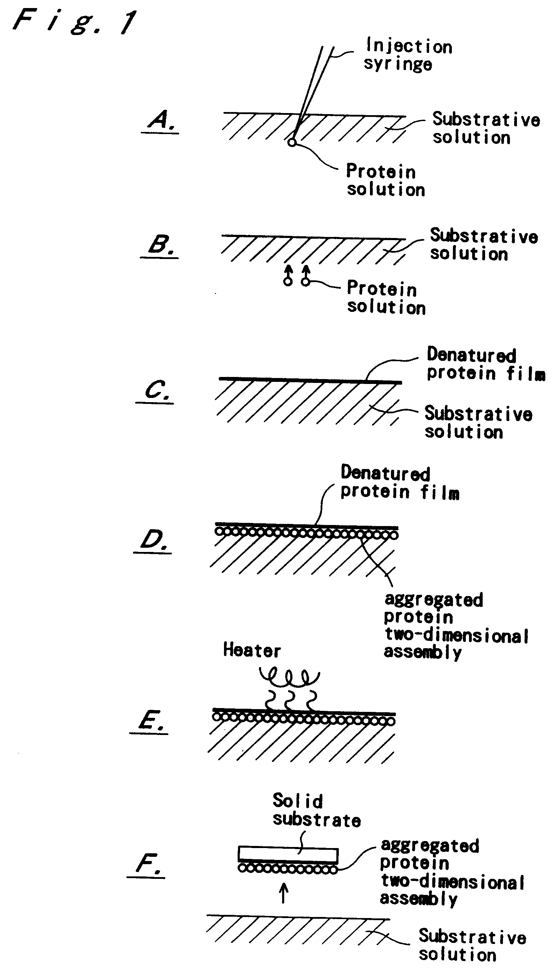

The method of the present invention is illustrated in Fig. 1. With reference to Fig. 1, the method of the present invention is as follows:
A. A solution (substrate solution) having a larger surface tension than water, which contains dissolved glucose and salts (NaCl, KCl or the like) is prepared, and a protein solution is introduced into the substrate solution with an injector. At this point, specific gravity of the substrate solution is adjusted by glucose, salts, or heavy water(D₂0) so as to be larger than the protein solution.
B. Injected protein floats up to the surface by the difference in specific gravity.
C. When reaching the surface, the protein solution develops under the effect of the difference in surface tension with the substrate solution, and immediately a denatured film of that protein is formed on the surface.
D. After a while, non-denatured protein is adsorbed by the denatured film, forming a two-dimensional crystalline aggregate, and is fixed. By adjusting the concentration and the amount of poured protein solution, it is possible to make a thin three-dimensional crystalline multi-layer structure.
   In addition, as required,
E. A heat treatment (heating to 30 to 40^{∼}C, and then cooling slowly) is applied.
   and then,
F. Transcription is performed onto a solid substrate: The protein two-dimensional aggregate is transcribed onto a solid substrate such as a carbon film, quartz, or silicon, by physical adsorption, or in some cases, by chemical combination.

The above-mentioned steps were actually applied with an aqueous solution of glucose and NaCl as the substrate solution and using an aqueous solution of equine spleen ferritin, and a two-dimensional aggregate of protein ferritin was transcribed on a carbon substrate. By controlling the ferritin concentration, a two-layer structure, and then structures with more than two layers, could be formed.

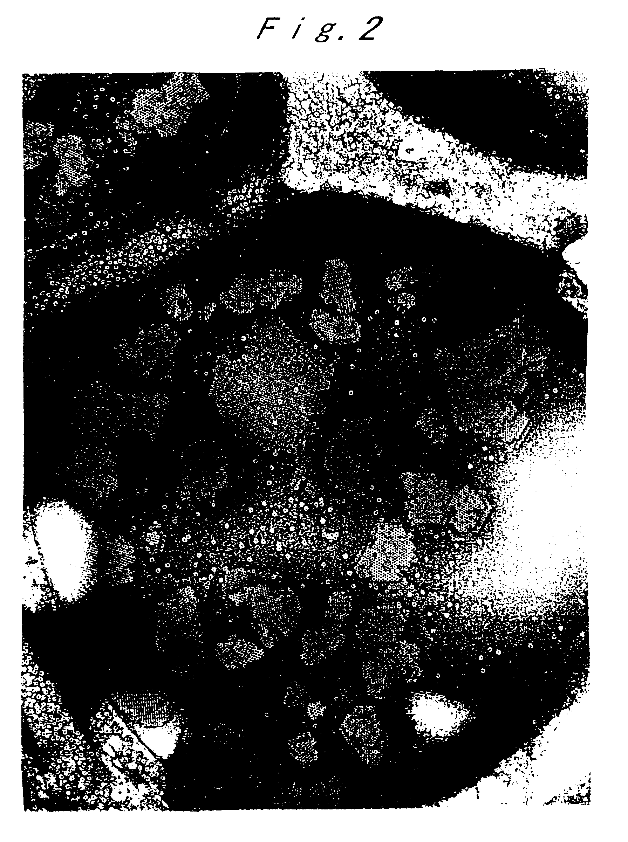

Fig. 2 is an electron micrograph showing an example of two-dimensional aggregation and fixation of this equine spleen ferritin. A monolayer two-dimensional crystalline aggregate is observed at the center.

In this case, a denatured film may be formed, not with protein of the same kind, but with protein of a different kind. More specifically, the following steps may be followed:
〈1〉 Development of protein for forming a denatured film: Because protein is easily denatured, it is necessary to select a kind suitable for forming a uniform denatured film.
〈2〉 Development of protein becoming crystalline.

According to the method of the present invention, as described above in detail, the following effects are available:
(1) Since the protein solution is poured into a substrate solution having a larger specific gravity and a larger surface tension than those of the protein solution, and protein floats up to develop on the surface, disturbance of solution upon development and non-uniformity are alleviated.
(2) It is not necessary to form a lipid monolayer as a two-dimensional crystallization substrate, because a surface denatured film is utilized.
(3) A thin three-dimensional crystalline aggregate can be formed by increasing the amount of protein to be developed.
(4) Only simple and low-cost equipment is required.
(5) Because of the absence of a drying process, the present invention is applicable to a protein not resistant to drying.

## Claims

1. A method of two-dimensional aggregation and fixation of protein, which comprises the steps of introducing a protein solution into a substrate solution having a larger surface tension and a larger specific gravity than those of the protein solution, causing the protein solution to float and develop on the surface of the substrate solution to produce a denatured protein film on the surface, and causing said film to adsorb further protein having been introduced into the substrate solution and floated.

2. A method as claimed in Claim 1 wherein multiple layers of two-dimensionally aggregated and fixed protein are formed.

3. A method as claimed in Claim 1 or Claim 2 wherein the two-dimensionally aggregated and fixed protein is heated to transcribe same onto a solid substrate.

4. A method as claimed in Claim 1, 2 or 3, wherein the protein forming said denatured protein film and the protein two-dimensionally aggregated and fixed onto said denatured protein film are of different kinds.

## Patentansprüche

1. Verfahren zur zweidimensionale Proteinaggregation und -fixierung, umfassend die Schritte: Einbringen einer Proteinlösung in eine Substratlösung mit größerer Oberflächenspannung und größerer spezifischer Dichte als die Proteinlösung, Veranlassen, daß die Proteinlösung auf der Oberfläche der Substratlösung schwimmt und sich darauf entwickelt, so daß auf der Oberfläche ein denaturierter Proteinfilm entsteht, und Veranlassen, daß der Film weiteres Protein adsorbiert, das in die Substratlösung eingebracht worden ist und schwimmt.

2. Verfahren nach Anspruch 1, wobei Mehrfachschichten aus zweidimensional aggregiertem und fixiertem Protein gebildet werden.

3. Verfahren nach Anspruch 1 oder Anspruch 2, wobei das zweidimensional aggregierte und fixierte Protein erhitzt wird, um es auf ein festes Substrat zu übertragen.

4. Verfahren nach Anspruch 1, 2 oder 3, wobei das Protein, das den denaturierten Proteinfilm bildet, und das zweidimensional aggregierte und auf den denaturierten Proteinfilm fixierte Protein unterschiedlich sind.

## Revendications

1. Procédé d'agrégation et de fixation bidimensionnelle de protéines qui comprend les étapes consistant à introduire une solution protéique dans une solution de substrat dont la tension superficielle et la gravité spécifique sont plus élevées que celles de la solution protéique, ce qui fait que la solution protéique flotte et se développe à la surface de la solution de substrat pour former un film protéique dénaturé à la surface et que ledit film adsorbe une autre protéine qui a été ajoutée dans la solution et qui flotte.

2. Procédé selon la revendication 1 dans lequel une multiplicité de couches de protéine agrégée et fixée sur un plan bidimensionnel est formée.

3. Procédé selon la revendication 1 ou la revendication 2 dans lequel la protéine agrégée et fixée sur un plan bidimensionnel est chauffée pour être transférée sur un substrat solide.

4. Procédé selon la revendication 1, 2 ou 3 dans lequel la protéine formant ledit film protéique dénaturé et la protéine agrégée et fixée en deux dimensions sur ledit film protéique dénaturé sont de types différents.
